# FASCICULE DE BREVET EUROPEEN

(11) **EP 1 188 631 B1**
(45) Date de publication et mention de la délivrance du brevet: **20.06.2007**
(21) Numéro de dépôt: 01402304.8
(22) Date de dépôt: 06.09.2001
(51) Int. Cl.: B60T 7/12

(54) **Procédé et dispositif de commande de freinage**
Verfahren und Vorrichtung zur Bremssteuerung
Method and device for controlling the braking

(30) Priorité: 13.09.2000 FR 0011628
(43) Date de publication de la demande: 20.03.2002
(73) Titulaire: Renault s.a.s., 92100 Boulogne Billancourt (FR)
(72) Inventeur: Bodin, Pascal, 78280 Guyancourt (FR); Guillerey, Bernard, 78550 Richebourg (FR)

(56) Documents cités:
- WO-A-95/03965
- DE-A- 19 510 796
- DE-A- 19 836 687
- US-A- 5 370 449

## Description

La présente invention concerne le domaine des véhicules automobiles, voitures particulières, véhicules de transport en commun, véhicules de transport de marchandises, engins spéciaux, agricoles, de manutention, de travaux, etc.

Les freins de parking automatiques pour véhicules permettent un gain de place et un confort d'utilisation plus élevé pour le conducteur.

On connaît par le document JP-A-7 144 623, un frein de parking qui assure le serrage des roues de façon automatique, si le mode d'arrêt est commandé, si la vitesse du véhicule est inférieure à une valeur prescrite, et si un freinage est en cours.

Le document DE A 198 36 687 décrit un frein de parking automatique pouvant être commandé par le conducteur par l'intermédiaire d'un interrupteur de commande, auquel pour des raisons de sécurité peut être ajouté un interrupteur supplémentaire, en tenant compte à la fois de l'état de l'interrupteur et des conditions d'utilisation du véhicule, comme le système d'allumage et la vitesse du véhicule.

L'invention propose d'améliorer les freins de parking automatiques.

L'invention propose de nouvelles prestations accroissant la sécurité d'utilisation du véhicule.

Le procédé de commande, selon un aspect l'invention, est destiné à un moyen de freinage d'un véhicule. L'actionnement d'une palette de commande par le conducteur étant détecté par deux capteurs, si les signaux issus desdits capteurs sont discordants, le freinage est appliqué si le véhicule se déplace à une vitesse inférieure à une première valeur prédéterminée P₁ et le freinage n'est pas appliqué si le véhicule se déplace à une vitesse supérieure à la première valeur prédéterminée P₁.

Avantageusement, l'actionnement de la palette de commande étant interrompu, le freinage est maintenu si le véhicule se déplace à une vitesse inférieure à une deuxième valeur prédéterminée P₂ et le freinage est interrompu si le véhicule se déplace à une vitesse supérieure à la deuxième valeur prédéterminée P₂.

Dans un mode de réalisation de l'invention, la deuxième valeur prédéterminée P₂ est supérieure à la première valeur prédéterminée P₁.

Dans un mode de réalisation de l'invention, on interrompt le freinage en actionnant la palette de commande et un bouton de desserrage.

Dans un mode de réalisation de l'invention, on interrompt le freinage en actionnant la palette de commande puis un bouton de desserrage.

De préférence, on interrompt le freinage en actionnant la palette de commande puis un bouton de desserrage tout en maintenant la palette de commande.

De préférence, le bouton de desserrage est libéré mécaniquement par l'actionnement de la palette de commande.

Avantageusement, le freinage est interrompu à réception de signaux concordants provenant des capteurs d'actionnement de la palette de commande et d'un signal provenant du capteur d'actionnement du bouton de desserrage.

L'invention concerne également un dispositif de commande d'un moyen de freinage d'un véhicule comprenant une palette de commande apte à être actionnée par le conducteur, deux capteurs de l'actionnement de la palette de commande, et une unité de traitement de l'information de façon que si les signaux issus desdits capteurs sont discordants, le freinage est appliqué si le véhicule se déplace à une vitesse inférieure à une première valeur prédéterminée P₁ et le freinage n'est pas appliqué si le véhicule se déplace à une vitesse supérieure à la première valeur prédéterminée P₁.

L'invention concerne également un programme d'ordinateur comprenant des moyens de code programme pour mettre en oeuvre les étapes du procédé, lorsque ledit programme fonctionne sur un ordinateur.

L'invention concerne également un support capable d'être lu par un dispositif de lecture de moyens de code programme qui s'y trouvent stockés et qui sont aptes à la mise en oeuvre des étapes du procédé, lorsque ledit programme fonctionne sur un ordinateur.

On assure ainsi un freinage adapté à la situation instantanée du véhicule, auquel s'il se déplace on applique un freinage destiné à le ralentir sans risque d'influence néfaste sur sa tenue de route et s'il est à l'arrêt on applique un freinage destiné à le bloquer pour éviter tout déplacement intempestif. De plus, le freinage peut être maintenu par défaut ou relâché par défaut selon la vitesse du véhicule.

La présente invention sera mieux comprise et d'autres avantages apparaîtront à la lecture de la description détaillée d'un mode de réalisation pris à titre d'exemple nullement limitatif et illustré par les dessins annexés, sur lesquels :
- la figure 1 est une vue schématique d'un véhicule équipé d'un frein automatique;
- la figure 2 est une vue schématique d'une palette de commande d'un frein automatique;
- les figures 3 à 5 sont des vues de la palette de la figure 2 dans différentes positions;
- la figure 6 est un organigramme d'étapes de procédé selon un aspect de l'invention; et
- la figure 7 est un organigramme d'étapes de procédé selon un aspect de l'invention.

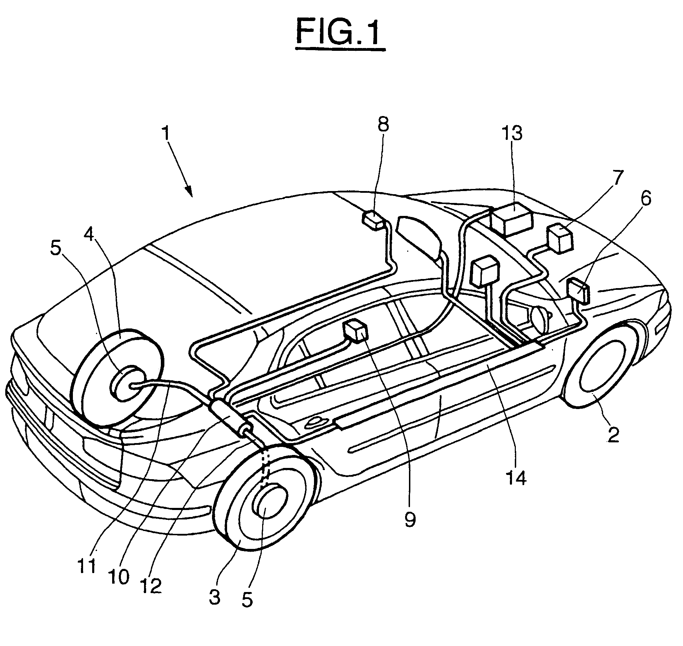

Comme on peut le voir sur la figure 1, un véhicule référencé 1 dans son ensemble est pourvu de deux roues avant 2, dont une seule est visible, équipées de freins et de deux roues arrière 3, 4 équipées de freins 5, d'un groupe motopropulseur commandé par un calculateur 6 et, de façon optionnelle, d'un système antiblocage de freins 7 relié à quatre capteurs de paramètres de rotation, chacun associé à une roue avant 2 ou arrière 4. Dans l'habitacle du véhicule, est prévu au moins un ensemble de commande de freinage de parking 8.

Le véhicule 1 comprend, en outre, un dispositif de commande de freinage se présentant sous la forme d'un boîtier 9 pourvu d'une unité de calcul, du genre à processeur, de moyens mémoire, d'un programme de commande et d'actionneurs 10 agissant sur des câbles 11 et 12 aptes à commander mécaniquement le serrage des freins arrière 5 dédié aux roues arrière 4.

L'ensemble de commande de freinage 8 est relié au boîtier 9. Le calculateur 6 du groupe motopropulseur est également relié au boîtier 9 pour lui fournir une information relative à un état de marche ou d'arrêt dudit groupe motopropulseur.

L'ensemble des éléments consommateurs d'énergie électrique est relié une batterie 13. L'échange d'information entre les différents éléments est assuré par un bus de communication 14, par exemple de type CAN.

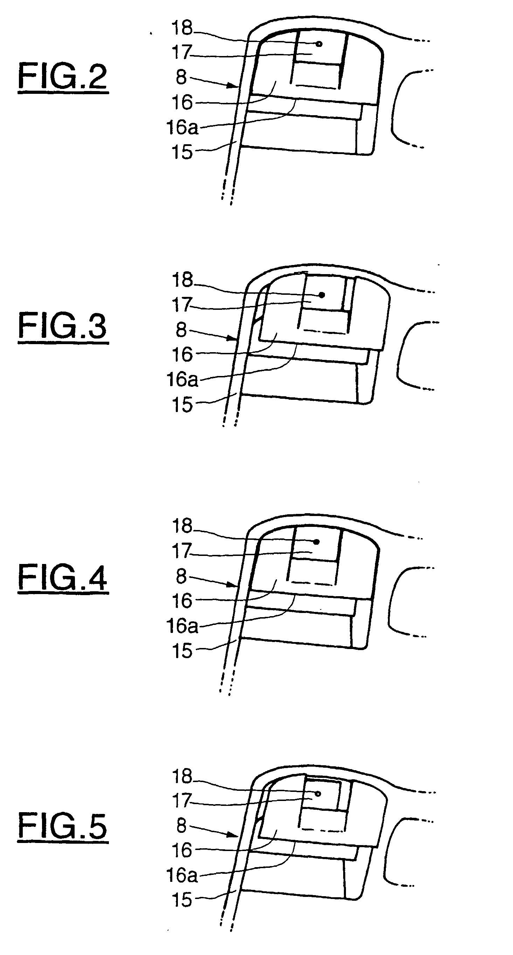

L'ensemble de commande de freinage 8 est illustré plus en détail sur les figures 2 à 5 et comprend un panneau 15 qui fait partie de la planche de bord du véhicule 1, dans lequel sont montés une palette 16 du genre apte à être saisie par le conducteur par son bord inférieur 16a pour être tirée en direction du conducteur, et un bouton 17 apte à être poussé à l'opposé du conducteur. Au centre du bouton 17 est prévue une source lumineuse 18, par exemple une diode électroluminescente. Le bouton 17 est disposé sensiblement au milieu et dans une partie supérieure de la palette 16.

Le déplacement de la palette 16 par le conducteur est détecté par deux capteurs, non représentés, qui peuvent se présenter sous la forme de commutateurs électriques qui présentent une tige d'actionnement apte à coopérer avec une rampe, non représentée, de la palette 16, le déplacement de la rampe provoquant le déplacement de la tige et l'ouverture ou la fermeture d'un circuit électrique. Pour plus de sécurité, on pourra prévoir que l'un des commutateurs est de type analogique, tandis que l'autre est de type numérique. Le mouvement d'enfoncement du bouton 17 est également détecté par un capteur, non représenté, pouvant être un commutateur de type numérique.

Le fonctionnement du dispositif de freinage est le suivant. Au repos, voir figure 2, la palette 16 et le bouton 17 sont sensiblement dans le plan du panneau 15. Lorsque la palette est tirée, voir figure 3, les deux commutateurs associés émettent un signal qui est reçu par le boîtier 9. Lorsque le conducteur relâche la palette, celle-ci revient dans sa position initiale. Si, au retour, dans la position initiale de la palette 16, un freinage est déclenché, alors la source lumineuse 18 est activée, voir figure 4. Le conducteur sait ainsi que le frein est serré. Le desserrage ou relâchement du frein s'effectue, voir figure 5, en tirant d'abord sur la palette 16, puis en poussant le bouton 17 tout en maintenant la palette 16 en position tirée. On peut alors relâcher la palette 16 et le bouton 17.

Le bouton 17 est pourvu d'un verrou mécanique qui empêche son enfoncement si la palette 16 est au repos et l'autorise lorsqu'elle est en position tirée. On oblige ainsi l'utilisateur à une double action, ce qui réduit le risque qu'un enfant ne provoque un desserrage de frein à l'insu du conducteur et réduit également le risque d'un desserrage par inadvertance. La course de la palette 16 pourra être de l'ordre de 10 mm, tandis que la course du bouton 17 pourra être de l'ordre de 4 mm.

De plus, pour accroître encore la sécurité de fonctionnement, lorsque le véhicule est déjà à l'arrêt ou quasiment arrêté, le boîtier 9 commande le serrage des freins dès que l'un des deux commutateurs de la palette 16 lui envoie un signal de serrage, ce qui constitue donc une priorité au serrage. Au contraire, lorsque le véhicule est en mouvement, priorité est accordée au desserrage et le boîtier 9 n'envoie d'ordre de serrage aux actionneurs 10 que lorsqu'il a reçu une information de serrage concordante des deux commutateurs de la palette 16.

Une fois le freinage activé, par exemple dans la situation illustrée sur la figure 4, le desserrage n'est autorisé par le boîtier 9 qu'après réception des signaux en provenance des trois commutateurs, à savoir les deux commutateurs de la palette 16 indiquant que celle-ci a été tirée et du commutateur du bouton 17 indiquant que celui-ci a été poussé. Ainsi, même en cas de rupture du verrou mécanique du bouton 17, le seul fait d'enfoncer celui-ci ne provoquerait pas un desserrage. En d'autres termes, lorsque le véhicule est à l'arrêt, frein de parking serré, priorité est accordée au maintien à l'état serré dudit frein de parking.

Enfin, lorsque le véhicule est en mouvement et que le conducteur tire sur la palette 16, le boîtier 9 commande le serrage des freins de parking par les actionneurs 10, mais provoque l'interruption du serrage dès le relâchement de la palette 16. On retourne donc dans la situation illustrée sur la figure 2. En d'autres termes, si le conducteur actionne en roulant la palette 16, le serrage des freins de parking sera temporaire et interrompu dès le retour de la palette 16 dans sa position de repos.

Pour augmenter encore la sécurité de fonctionnement, on peut prévoir qu'un commutateur de type analogique associé à la palette 16 soit alimenté en permanence, y compris lorsque le véhicule est à l'arrêt, contact coupé.

Le frein de parking automatique offre un grand confort d'utilisation au conducteur qui n'a plus besoin de s'en occuper. Le frein de parking se serre automatiquement lorsque le conducteur quitte le véhicule et se desserre automatiquement quand il démarre. En cas de démarrage en côte, il suffit d'une impulsion sur la commande manuelle de l'ensemble de commande de freinage pour immobiliser le véhicule dans la pente. Ensuite, le frein se desserre automatiquement quand le véhicule a suffisamment de motricité. Un capteur d'inclinaison peut permettre de doser le serrage en fonction de la pente. Le boîtier 9 permet de gérer différentes situations :
- un mode veille avec surveillance et correction du serrage quand le contact du véhicule est coupé,
- un mode serrage automatique dès la coupure du moteur,
- un mode frein sécurisé avec interdiction de desserrage après le verrouillage de la direction,
- un mode desserrage automatique quand la motricité est suffisante,
- un mode freinage résiduel avec antiblocage de roues simplifié,
- un mode optionnel avec une étape de configuration permettant de neutraliser la fonction serrage automatique dans des circonstances particulières, par exemple en cas de grand froid.

Une commande de secours peut également être prévue pour permettre le desserrage même en cas de panne du frein de parking automatique.

Le desserrage qui est prioritaire en cas de déplacement du véhicule à une vitesse supérieure à un seuil prédéterminé, peut également être sujet à une condition d'activation de la pédale d'accélérateur et à une condition d'engagement d'un rapport de vitesse.

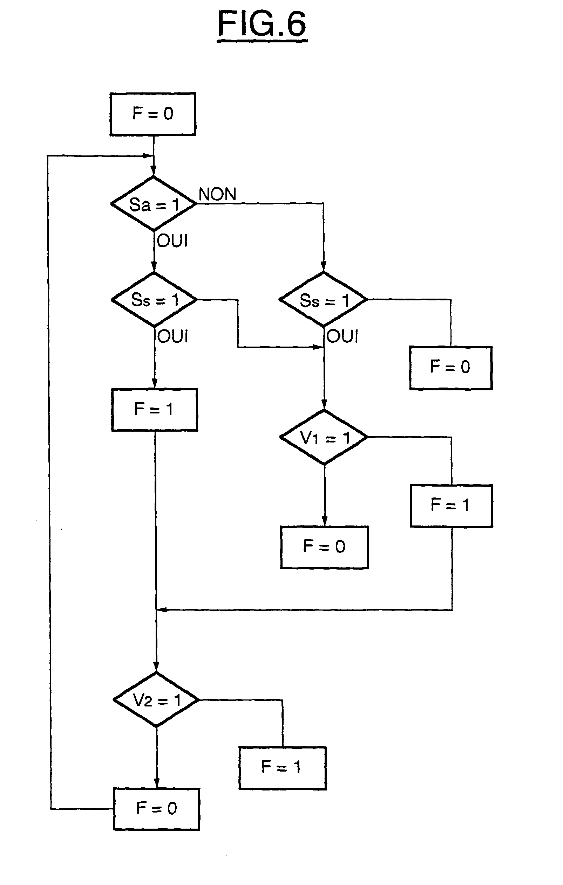

Le dispositif de commande de freinage fonctionne, comme illustré sur la figure 6.

Soit Sₐ une variable qui vaut 0 si le commutateur est inactif et 1 si le commutateur est activé. Soit Sₛ une variable qui vaut 0 si le commutateur est inactif et 1 si le commutateur est activé. Soit V₁ une variable qui vaut 0 si la vitesse est inférieure du véhicule est inférieure à une première valeur prédéterminée P₁, par exemple inférieure ou égale à 1 km/h. Soit V₂ une variable qui vaut 0 si la vitesse est inférieure du véhicule est inférieure à une deuxième valeur prédéterminée P₂, par exemple égale à 10 km/h. Soit F une variable de commande de l'activation du freinage. Si F = 0, le freinage n'est pas appliqué. Si F = 1, le freinage est appliqué.

A partir d'un état : F = 0, on effectue un premier test sur la variable Sₐ. Si Sₐ vaut 1, on effectue un deuxième test sur la variable Sₛ. Si Sₛ vaut 1, on commande F = 1 et on effectue un troisième test sur la variable V₂. Si V₂ vaut 1, on commande F = 0 et on recommence le premier test.

Si Sₐ vaut 0, on effectue un quatrième test sur la variable Sₛ. Si Sₛ vaut 0, on commande F = 0 et on arrête l'algorithme. Si Sₛ vaut 1, on effectue un cinquième test sur la variable V₁. Si V₁ vaut 1, on commande F = 0 et on arrête l'algorithme. Si V₁ vaut 0, on commande F = 1 et on passe au troisième test sur la variable V₂.

Si Sₛ vaut 0, on effectue le cinquième test sur la variable V₁.

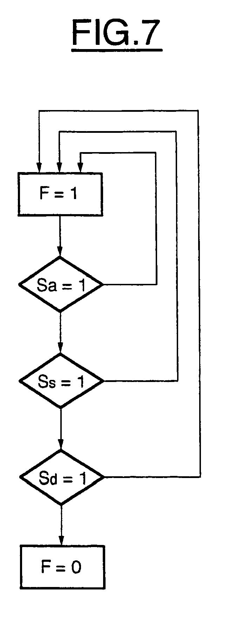

Le relâchement du freinage fonctionne, comme illustré sur la figure 7.

Soit S_{d} une variable qui vaut 0 si le commutateur est inactif et 1 si le commutateur est activé.

A partir d'un état : F = 1, on effectue un sixième test sur la variable Sₐ. Si Sₐ vaut 1, on effectue un septième test sur la variable Sₛ. Si Sₛ vaut 1, on effectue un huitième test sur la variable S_{d}. Si S_{d} vaut 1, on commande F = 0 et on arrête l'algorithme.

Si Sₐ vaut 0, on maintient l'état F = 1.

Si Sₛ vaut 0, on maintient l'état F = 1.

Si S_{d} vaut 0, on maintient l'état F = 1. On peut alors recommencer l'algorithme de relâchement du freinage.

La présente invention permet d'augmenter de façon considérable la sécurité de fonctionnement d'un frein de parking automatique en réduisant le risque d'application d'un effort de freinage due à une erreur de fonctionnement et susceptible d'être dangereux en surprenant le conducteur.

## Revendications

1. Procédé de commande d'un moyen de freinage d'un véhicule, dans lequel on détecte l'actionnement d'un moyen de commande de freinage, **caractérisé par le fait que** le moyen de commande est une palette de commande manuelle pouvant être actionnée par le conducteur entre une position tirée et une position relâchée, l'actionnement de la palette étant détecté par deux capteurs, on applique un freinage si le véhicule se déplace à une vitesse inférieure à une première valeur prédéterminée P1 et si les signaux issus des capteurs sont discordants, on n'applique pas de freinage si le véhicule se déplace à une vitesse supérieure à la première valeur prédéterminée P1 et si les signaux issus des capteurs sont discordants.

2. Procédé de commande selon la revendication 1, **caractérisé par le fait que** l'actionnement de la palette de commande étant interrompu, le freinage est maintenu si le véhicule se déplace à une vitesse inférieure à une deuxième valeur prédéterminée P₂ et le freinage est interrompu si le véhicule se déplace à une vitesse supérieure à la deuxième valeur prédéterminée P₂.

3. Procédé de commande selon la revendication 1 ou 2, **caractérisé par le fait que** la deuxième valeur prédéterminée P₂ est supérieure à la première valeur prédéterminée P₁.

4. Procédé de commande selon l'une quelconque des revendications précédentes, **caractérisé par le fait que** on interrompt le freinage en actionnant la palette de commande et un bouton de desserrage.

5. Procédé de commande selon la revendication 4, **caractérisé par le fait que** on interrompt le freinage en actionnant la palette de commande puis un bouton de desserrage.

6. Procédé de commande selon la revendication 5, **caractérisé par le fait que** on interrompt le freinage en actionnant la palette de commande puis un bouton de desserrage tout en maintenant la palette de commande.

7. Procédé de commande selon l'une quelconque des revendications 4 à 6, **caractérisé par le fait que** le bouton de desserrage est libéré mécaniquement par l'actionnement de la palette de commande.

8. Procédé de commande selon l'une quelconque des revendications 4 à 7, **caractérisé par le fait que** le freinage est interrompu à réception de signaux concordants provenant des capteurs d'actionnement de la palette de commande et d'un signal provenant du capteur d'actionnement du bouton de desserrage.

9. Dispositif de commande d'un moyen de freinage d'un véhicule, comprenant un moyen de commande de freinage et une unité de traitement de l'information, **caractérisé par le fait que** le moyen de commande de freinage est une palette de commande manuelle pouvant être actionnée par le conducteur entre une position tirée et une position relâchée, l'actionnement de la palette étant détecté par deux capteurs reliés à l'unité de traitement, de façon qu'on applique un freinage si le véhicule se déplace à une vitesse inférieure à une première valeur prédéterminée P1 et si les signaux issus des capteurs sont discordants, on n'applique pas de freinage si le véhicule se déplace à une vitesse supérieure à la première valeur prédéterminée P1 et si les signaux issus des capteurs sont discordants.

## Claims

1. Method for controlling a braking means of a vehicle, in which actuation of a brake control means is detected, **characterized in that** the control means is a manual control paddle lever which can be actuated by the driver between a pulled position and a released position, actuation of the paddle lever being detected by two sensors, braking is applied if the vehicle is moving along at a speed lower than a first predetermined value P₁ and if the signals from the sensors do not tally; braking is not applied if the vehicle is moving along at a speed higher than the first predetermined value P₁ and if the signals from the sensors do not tally.

2. Control method according to Claim 1, **characterized in that** if actuation of the control paddle lever is interrupted, braking is maintained if the vehicle is moving along at a speed lower than a second predetermined value P₂ and braking is interrupted if the vehicle is moving along at a speed higher than the second predetermined value P₂.

3. Control method according to Claim 1 or 2, **characterized in that** the second predetermined value P₂ is higher than the first predetermined value P₁.

4. Control method according to any one of the preceding claims, **characterized in that** braking is interrupted by actuating the control paddle lever and a brake-release button.

5. Control method according to Claim 4, **characterized in that** braking is interrupted by actuating the control paddle lever followed by a brake-release button.

6. Control method according to Claim 5, **characterized in that** braking is interrupted by actuating the control paddle lever followed by a brake-release button while still holding the control paddle lever.

7. Control method according to any one of Claims 4 to 6, **characterized in that** the brake-release button is mechanically released by actuation of the control paddle lever.

8. Control method according to any one of Claims 4 to 7, **characterized in that** braking is interrupted upon receipt of tallying signals from the control paddle lever actuation sensors and of a signal from the brake-release button actuation sensor.

9. Device for controlling a braking means of a vehicle, comprising a brake control means and a data processing unit, **characterized in that** the brake control means is a manual control paddle lever which can be actuated by the driver between a pulled position and a released position, actuation of the paddle lever being detected by two sensors connected to the processing unit so that braking is applied if the vehicle is moving along at a speed lower than a first predetermined value P₁ and if the signals from the sensors do not tally; braking is not applied if the vehicle is moving along at a speed higher than the first predetermined value P₁ and if the signals from the sensors do not tally.

## Patentansprüche

1. Verfahren zur Steuerung eines Bremsmittels eines Fahrzeugs, in welchem die Betätigung eines Bremssteuermittels erkannt wird, **dadurch gekennzeichnet, dass** das Steuermittel ein Zuggriff ist, der vom Fahrer zwischen einer gezogenen Stellung und einer gelösten Stellung betätigt werden kann, wobei die Betätigung des Zuggriffs von zwei Sensoren erkannt wird, eine Bremsung durchgeführt wird, wenn das Fahrzeug sich mit einer Geschwindigkeit kleiner als ein erster vorbestimmter Wert P1 bewegt und wenn die Signale von den Sensoren nicht übereinstimmen, und keine Bremsung durchgeführt wird, wenn das Fahrzeug sich mit einer Geschwindigkeit größer als der erste vorbestimmte Wert P1 bewegt und wenn die Signale von den Sensoren nicht übereinstimmen .

2. Steuerverfahren nach Anspruch 1, **dadurch gekennzeichnet, dass** die Bremsung nach Abbruch der Betätigung des Zuggriffs aufrechterhalten wird, wenn das Fahrzeug sich mit einer Geschwindigkeit kleiner als ein zweiter vorbestimmter Wert P2 bewegt, und die Bremsung abgebrochen wird, wenn das Fahrzeug sich mit einer Geschwindigkeit größer als der zweite vorbestimmte Wert P2 bewegt.

3. Steuerverfahren nach Anspruch 1 oder 2, **dadurch gekennzeichnet, dass** der zweite vorbestimmte Wert P2 größer ist als der erste vorbestimmte Wert P1.

4. Steuerverfahren nach einem der vorherigen Ansprüche, **dadurch gekennzeichnet, dass** die Bremsung abgebrochen wird, indem der zuggriff und ein Löseknopf betätigt werden.

5. Steuerverfahren nach Anspruch 4, **dadurch gekennzeichnet, dass** die Bremsung abgebrochen wird, indem der Zuggriff und dann ein Löseknopf betätigt werden.

6. Steuerverfahren nach Anspruch 5, **dadurch gekennzeichnet, dass** die Bremsung abgebrochen wird, indem der Zuggriff und dann ein Löseknopf betätigt werden, während der zuggriff festgehalten wird.

7. Steuerverfahren nach einem der Ansprüche 4 bis 6, **dadurch gekennzeichnet, dass** der Löseknopf durch das Betätigen des Zuggriffs mechanisch gelöst wird.

8. Steuerverfahren nach einem der Ansprüche 4 bis 7, **dadurch gekennzeichnet, dass** die Bremsung abgebrochen wird, wenn übereinstimmende Signale von den Betätigungssensoren des Zuggriffs und ein Signal vom Betätigungssensor des Löseknopfs empfangen wird.

9. Vorrichtung zur Steuerung eines Bremsmittels eines Fahrzeugs, umfassend ein Bremssteuermittel und eine Informationsverarbeitungseinheit, **dadurch gekennzeichnet, dass** das Bremssteuermittel ein Zuggriff ist, der vom Fahrer zwischen einer gezogenen Stellung und einer gelösten Stellung betätigt werden kann, wobei die Betätigung des Zuggriffs von zwei Sensoren erkannt wird, die mit der Verarbeitungseinheit verbunden sind, wobei eine Bremsung durchgeführt wird, wenn das Fahrzeug sich mit einer Geschwindigkeit kleiner als ein erster vorbestimmter Wert P1 bewegt und wenn die Signale von den Sensoren nicht übereinstimmen, und keine Bremsung durchgeführt wird, wenn das Fahrzeug sich mit einer Geschwindigkeit größer als der erste vorbestimmte Wert P1 bewegt und wenn die Signale von den Sensoren nicht übereinstimmen.
